# EUROPÄISCHE PATENTSCHRIFT

(11) **EP 1 374 331 B1**
(45) Veröffentlichungstag und Bekanntmachung des Hinweises auf die Patenterteilung: **23.02.2005**
(21) Anmeldenummer: 02702396.9
(22) Anmeldetag: 05.03.2002
(51) Int. Cl.: H01M 10/40, G02F 1/15

(54) **ELEKTROLYTE FÜR LITHIUMIONENBATTERIEN**
ELECTROLYTES FOR LITHIUM ION BATTERIES
ELECTROLYTE DESTINE A DES PILES AUX IONS LITHIUM

(30) Priorität: 08.03.2001 DE 10111410
(43) Veröffentlichungstag der Anmeldung: 02.01.2004
(73) Patentinhaber: Chemetall GmbH, 60487 Frankfurt (DE)
(72) Erfinder: PANITZ, Jan-Christoph, 60487 Frankfurt (DE); WIETELMANN, Ulrich, 61381 Friedrichsdorf (DE); SCHOLL, Markus, 61118 Bad Vilbel (DE)
(74) Vertreter: Uppena, Franz, Dr.
(86) Internationale Anmeldenummer: PCT/EP2002/002391
(87) Internationale Veröffentlichungsnummer: WO 2002/071528

(56) Entgegenhaltungen:
- EP-A- 0 922 049
- EP-A- 1 052 714
- WO-A-00/00495
- XU W ET AL: "LIBOB AND ITS DERIVATIVES WEAKLY COORDINATING ANIONS AND THE EXCEPTIONAL CONDUCTIVITY OF THEIR NONAQUEOUS SOLUTIONS" ELECTROCHEMICAL AND SOLID-STATE LETTERS, IEEE SERVICE CENTER, PISCATAWAY, NJ, US, Bd. 4, Nr. 1, Januar 2001 (2001-01), Seiten E01-E04, XP001101362 ISSN: 1099-0062
- PATENT ABSTRACTS OF JAPAN vol. 1995, no. 09, 31. Oktober 1995 (1995-10-31) & JP 07 153486 A (JAPAN STORAGE BATTERY CO LTD), 16. Juni 1995 (1995-06-16)

## Beschreibung

Die Erfindung betrifft Elektrolyte für Lithiumionenbatterien.

In vielen kommerziellen Lithiumionenbatterien wird als Leitsalz Lithiumhexafluorophosphat verwendet. Dieses Salz besitzt alle notwendigen Eigenschaften für einen Einsatz in solchen Batterien, insbesondere zeichnet es sich durch eine gute Löslichkeit in aprotischen Lösungsmitteln, verbunden mit einer vergleichsweisen hohen ionischen Leitfähigkeit seiner Lösungen aus. Lithiumhexafluorophosphat hat jedoch bei alleiniger Verwendung als Leitsalz auch schwerwiegende Nachteile, insbesondere die schlechte thermische Stabilität und die ausgeprägte Neigung zur Hydrolyse in Anwesenheit von Spuren von Wasser, welche die Bildung von Fluorwasserstoffsäure, HF, sowie Phosphoroxytrifluorid, POF₃, beinhaltet.

Daher gibt es intensive Bemühungen, Leitsalze zu entwickeln, welche die genannten Nachteile des Lithiumhexafluorophosphates vermeiden. In der DE 19633027 A, der EP 0698301 B1, der EP 0907217 A2 und der DE 19829030 C1 wird die Anwendung von Lithiumsalzen in Lithiumionenbatterien beschrieben. Bei diesen Lithiumsalzen sind die Anionen Chelatoborate der allgemeinen Formel BL₂, wobei L ein zweizähniger Ligand ist, der über zwei Sauerstoffatome an das Boratom gebunden ist.

Während die in der DE 19633027 A beschriebenen Lithiumsalze der allgemeinen Formel

Li[B(OR¹)₂(OR²)₂] (1)

sich nur dann als Leitsalze für die Anwendung in Lithiumionenbatterien eignen, wenn die eingesetzten organischen Reste R¹ und R² teilweise fluoriert oder perfluoriert sind, offenbart die DE 19829030 C1 ein Leitsalz, nämlich Lithiumbis(oxalato)borat, welches eine hervorragende elektrochemische Stabilität aufweist. Der inhärente Vorteil dieses Salzes ist es, ohne jegliche Verwendung von Halogenen und halogenierten Verbindungen, insbesondere Fluor und seiner Verbindungen, hergestellt und eingesetzt werden zu können.

Ein Nachteil bei der Verwendung von Lithium-bis(oxalato)borat und anderen Lithium-chelatoboraten ist jedoch, dass ihre Lösungen in binären Lösungsmittelgemischen oft niedrigere ionische Leitfähigkeiten als vergleichbare Lösungen anderer Leitsalze, insbesondere Lithiumhexafluorophosphat, aufweisen. So besitzt z.B. eine 0,6 molare Lösung von Lithium-bis(oxalato)borat in Ethylencarbonat/Dimethylcarbonat (EC/DMC) 1:1 eine Leitfähigkeit von 7 mS/cm, eine 1,0 molare Lösung von LiPF₆ in dem gleichen Lösungsmittel dagegen eine Leitfähigkeit von 11 mS/cm. Zudem ist die Konzentration des Lithium-bis(oxalato)borates in binären Lösungsmittelgemischen auf der Basis von organischen Carbonaten begrenzt. Oft kann nur eine Konzentration von maximal 0,7 bis 0,8 Mol/l Lithium-bis(oxalato)borat in diesen Lösungsmittelgemischen erreicht werden.

Der verwendete Elektrolyt soll auch das Funktionieren der Batterie in einem möglichst breiten Temperaturbereich garantieren, insbesondere bei extrem tiefen Temperaturen. Die bereits beschriebene Lösung von Lithium-bis(oxalato)borat in EC/DMC erstarrt jedoch bereits bei Temperaturen < -15 °C und weist dann Leitfähigkeiten von etwa 10 bis 100 µS/cm auf, welche zum Betrieb einer Batterie bei üblichen Stromdichten nicht genügend sind. Dies stellt einen weiteren, gravierenden Nachteil der Lösungen von Lithium-bis(oxalato)borat (oder anderer Leitsalze) in binären Lösungsmittelgemischen auf der Basis von organischen Carbonaten dar.

In der EP 0980108 A1 werden quartemäre Mischungen aus Ethylencarbonat, Dimethylcarbonat, Diethylcarbonat und Ethylmethylcarbonat, ein Verfahren zu deren Herstellung, sowie die Verwendung solcher Mischungen zur Fertigung von Elektrolyten auf der Basis von LiAsF₆ mit verbesserten Temperatureigenschaften beschrieben. Benutzt man eine ähnliche quarternäre Mischung zur Herstellung eines Elektrolyten unter Verwendung von Lithium-bis(oxalato)borat als Leitsalz, so verbessert sich zwar die Leitfähigkeit bei tiefen Temperaturen (-20 °C), jedoch sinkt die Leitfähigkeit bei Raumtemperatur auf 5,5 mS/cm.

Zudem ist bekannt, dass Lösungen von Lithium-bis(oxalato)borat in Gemischen aus Propylencarbonat und 1,2-Dimethoxyethan (1:1) Leitfähigkeiten von bis zu 14 mS/cm erreichen (DE 19829030 C1). Solche Formulierungen sind typischerweise für den Einsatz in primären Lithiumbatterien konzipiert. Neuere Arbeiten berichten, dass für den Einsatz in sekundären Lithiumionenbatterien hohe Anteile von 1,2-Dimethoxyethan allerdings nicht geeignet sind (Katsuya Hayashi et al., Key Engineering Materials Vols. 181-182 (2000), pp. 143-146). Bis zu einem Anteil von < 20 Vol-% kann 1,2-Dimethoxyethan in einer Lösungsmittelmischung EC/DME jedoch ohne nachteilige Effekte eingesetzt werden.

Die ionische Leitfähigkeit des Elektrolyten hat eine direkte Auswirkung auf die Energie- und Leistungsdichte eines mit solchen Elektrolyten gefüllten galvanischen Elementes. Besonders die unter höherer Strombelastung entnehmbare Ladungsmenge sinkt in Folge einer zu niedrigen Leitfähigkeit eines Elektrolyten. Eine Möglichkeit, den Nachteil der auf Basis von Lithiumbis(oxalato)borat hergestellten Elektrolyten in Bezug auf ihre Hochstrombelastbarkeit zu mindern, besteht darin, größere Elektrodenflächen in den entsprechenden Batterien zu verwenden, um auf diese Weise die gewünschten Ladungsmengen bei geringeren Stromdichten entnehmen zu können. Die Nachteile einer solchen Lösung wären dann das zu große Volumen und die zu große Masse einer solchen Batterie; dies auch vor dem Hintergrund, dass die Batterien z.B. in portablen Geräten mit kleinen Gesamtgewichten eingesetzt werden sollen. Bei der Hochstrombelastbarkeit einer Batterie spielt auch die Konzentration des Leitsalzes eine Rolle, da diese die Leitfähigkeit des Elektrolyten mit beeinflusst. Weithin ist zu gewährleisten, dass an den Grenzflächen zwischen Elektrolyt und Elektroden stets eine ausreichende Konzentration an Lithiumionen vorhanden ist.

Es ist Aufgabe der vorliegenden Erfindung, die Nachteile des Standes der Technik zu überwinden und insbesondere Elektrolyten zur Anwendung in elektrochemischen Speichersystemen, z.B. Lithiumionenbatterien, zu schaffen, die eine gute und beständige Leitfähigkeit sowohl bei Raumtemperatur als auch bei tiefen Temperaturen aufweisen.

Die Aufgabe wird gelöst durch Elektrolyte, die folgende Inhaltsstoffe aufweisen:
Lithium-bis(oxalato)borat,
ein cyclisches Carbonat in einer Menge von 10 bis 35 Gew.-%, bevorzugt 10 bis 30 Gew.-%,
eine oder mehrere Verbindungen in einer Menge von 35 bis 55 Gew.-%,
ausgewählt aus acyclischen Carbonaten, aliphatischen Estern, alicyclischen Ethem und aliphatischen difunktionellen Ethern,
eine oder mehrere Verbindungen in einer Menge von 5 bis 40 Gew.-%, bevorzugt 10 bis 40 Gew.-%, ausgewählt aus Lactonen (bevorzugt sind γ-Lactone),
Dinitrilen, Verbindungen, die mindestens eine Carbonsäureestergruppe und eine Ethergruppe enthalten, Verbindungen, die mindestens eine
Kohlensäureestergruppe und eine Ethergruppe enthalten, Verbindungen, die mindestens eine Nitrilgruppe und eine Ethergruppe enthalten,
Trialkylphosphorsäureestem und Trialkylborsäureestern.

Es wurde gefunden, dass in Elektrolyten mit dieser Merkmalskombination Lithium-bis(oxalato)borat eine befriedigende bis sehr gute Löslichkeit aufweist, die Löslichkeit kaum von der Temperatur abhängt und ionische Leitfähigkeiten von > 9 mS/cm bei Raumtemperatur und > 2,5 mS/cm bei -25 °C erreicht werden.

Zusätzlich zum Lithium-bis(oxalato)borat kann der Elektrolyt noch ein oder mehrere weitere Lithiumsalze oder Alkalimetall- oder Ammoniumsalze enthalten, wobei das Molverhältnis von Lithium-bis(oxalato)borat zu den weiteren Salzen 99 :1 bis 80 : 20 beträgt. Die Konzentration von Lithium-bis(oxalato)borat oder der Mischung von Lithium-bis(oxalato)borat und einem oder mehreren der genannten Salze beträgt bevorzugt 0,2 Mol bis 2 Mol/kg Elektrolyt, was je nach evtl. zugesetzten Salzen einem Anteil von bevorzugt 4 bis 35 Gew.-% im fertigen Elektrolyten entspricht. Weitere Lithiumsalze können sein: LiBF₄, LiPF₆, LiAsF₆, LiClO₄, LiF, LiCl, LiBr, Lil, LiCF₃SO₃, LiN(CF₃SO₂)₂, LiN(C₂F₅SO₂)₂, LiC(CF₃)SO₂)₃, sowie andere Alkalimetallsalze, bzw. Ammoniumsalze aus der Klasse der Chelatoborate der allgemeinen Formel (1), wobei das Lithiumkation durch ein anderes Alkalimetallkation oder ein Ammoniumion ersetzt sein kann.

Als cyclisches Carbonat kann Ethylencarbonat (EC), Propylencarbonat (PC), Butylencarbonat (BC), Vinylencarbonat (VC), oder eine Mischungen dieser Carbonate eingesetzt werden.

Ein Inhaltsstoff des Elektrolyten besteht aus einer oder mehreren Verbindungen, ausgewählt aus acyclischen Carbonaten, aliphatischen Estern, alicyclischen Ethern und aliphatischen difunktionellen Ethem.

Acyclische Carbonate können die allgemeine Formel R₁O(CO)OR₂ haben, mit R₁, R₂ = CₙH₂ₙ₊₁ und n = 1 bis 4, und wobei R₁ und R₂ identisch sein können. Beispiele für solche acyclischen Carbonate sind Dimethylcarbonat (DMC), Diethylcarbonat (DEC), Dipropylcarbonat (DPC), Ethylmethylcarbonat (EMC), Methylpropylcarbonat (MPC), Butylmethylcarbonat (BMC), Ethylpropylcarbonat (EPC) und Butylethylcarbonat (BEC). Bevorzugt ist die Verwendung von DMC, DEC, EMC oder einer Mischung dieser Verbindungen. Besonders bevorzugt ist die Verwendung von EMC.

Aliphatische Ester können die allgemeine Formel R₁(CO)OR₂ haben, mit R₁ = H oder CₙH₂ₙ₊₁ und n = 1 bis 4, und R₂ = CₙH₂ₙ₊₁ und n = 1 bis 4. Beispiele für solche aliphatischen Ester sind Methylformat, Ethylformat, Propylformat, Methylacetat, Ethylacetat (EA) und Butylacetat. Bevorzugt ist die Verwendung von Propylformat, Ethylacetat oder einer Mischung dieser Verbindungen.

Alicyclische Ether können sein Tetrahydrofuran (THF), oder 2-Methyltetrahydrofuran oder Tetrahydropyran (THP).

Aliphatische, difunktionelle Ether können die allgemeine Formel R₁OR₂OR₃ haben, mit R₁ und R₃ = aliphatische Reste der Formel -CₙH₂ₙ₊₁ und n = 1 bis 4, und mit R₂ = -(CH₂)ₘ und m = 1 bis 4, und wobei R₁ und R₃ identisch sein können. Beispiele für solche aliphatischen, difunktionellen Ether sind Dimethoxyethan (DME) und Diethoxyethan (DEE).

Ein Inhaltsstoff des Elektrolyten besteht aus einer oder mehreren Verbindungen, ausgewählt aus Lactonen, Dinitrilen, Verbindungen, die mindestens eine Carbonsäureestergruppe und eine Ethergruppe enthalten, Verbindungen, die mindestens eine Kohlensäureestergruppe und ein Ethergruppe enthalten, Verbindungen, die mindestens eine Nitrilgruppe und eine Ethergruppe enthalten, Trialkylphosphorsäureestern und Trialkylborsäureestern.

Lactone können bevorzugt γ-Lactone, wie γ-Butyrolacton (GBL) oder γ-Valerolacton (GVL) sein.

Dinitrile können die allgemeine Formel CNR₁CN haben, mit R₁ = -(CH₂)ₙ- und n = 2 bis 8. Beispiele sind Glutaronitril (GTN) oder Adiponitril (ADN).

Verbindungen, die mindestens eine Carbonsäureestergruppe und eine Ethergruppe enthalten, können die allgemeine Formel R₁(CO)OR₂OR₃ haben, mit R₁ = -CₙH₂ₙ₊₁ und n = 1 bis 4, R₂ = -(CH₂)ₙ- und n = 2 bis 5, oder R₂ = -(CH₂CH₂O)ₘ- mit m = 2 bis 4, und R₃ = -CₙH₂ₙ₊₁ und n = 1 bis 4. Beispiele für solche Verbindungen sind Methoxy-ethylacetat, Ethoxy-ethylacetat und 2-(2-Ethoxyethoxy)-ethylacetat.

Verbindungen, die mindestens eine Kohlensäureestergruppe und ein Ethergruppe enthalten, können die allgemeine Formel R₁OR₂O(CO)OR₃ haben, mit R₁, R₃ = -CₙH₂ₙ₊₁ und n = 1 bis 4 und R₂ = -(CH₂)ₙ- und n = 2 bis 5. Ein Beispiel für solche Verbindungen ist (2-Methoxy-ethyl)-methylcarbonat (MOEMC).

Verbindungen, die mindestens eine Nitrilgruppe und eine Ethergruppe enthalten, können die allgemeine Formel R₁OR₂(CN) haben, mit R₁= -CₙH₂ₙ₊₁ mit n = 1 bis 4, und R₂ = -(CH₂)ₘ- mit m = 1 bis 6. Ein Beispiel für solche Verbindungen ist Methoxypropansäurenitril.

Trialkylphosphorsäureester haben die allgemeine Formel (R₁O)(R₂O)(R₃O)(PO), wobei R₁, R₂ und R₃ aliphatische Reste des Typs -CₙH₂ₙ₊₁ mit n = 1 bis 6 darstellen, oder wobei R₁, R₂, R₃ aliphatische Reste des Typs -((CH₂)ₖ-X-)ₗ-CₘH₂ₘ₊₁ mit k = 1 bis 4, l = 1 bis 4, m = 1 bis 4 und X = O, S, oder N(R₄) mit R₄ = CₙH₂ₙ₊₁ mit n = 1 bis 4 darstellen, und wobei die jeweiligen Reste R₁, R₂ und R₃ identisch sein können. Verbindungen dieses Typs können alleine oder in Mischungen verwendet werden. Ein Beispiel für solche Verbindungen ist Trimethylphosphat.

Trialkylborsäureester haben die allgemeine Formel (R₁O)(R₂O)(R₃O)B, wobei R₁, R₂, R₃ aliphatische Reste der Formel -CₙH₂ₙ₊₁ mit n = 1 bis 6 darstellen, oder wobei R₁, R₂, R₃ aliphatische Reste des Typs -((CH₂)ₖ-X-)ₗ-CₘH₂ₘ₊₁ mit k = 1 bis 4, l = 1 bis 4, m = 1 bis 4 und X = O, S, oder N(R₄) mit R₄ = CₙH₂ₙ₊₁ mit n = 1 bis 4 darstellen, und wobei die jeweiligen Reste R₁, R₂ und R₃ identisch sein können.

Verbindungen dieses Typs können alleine oder in Mischungen verwendet werden. Ein Beispiel für solche Verbindungen ist Tributylborat.

Zusätzlich kann der Elektrolyt Additive, wie Pyrokohlensäureester (z.B. Pyrokohlensäuredimethylester, Pyrokohlensäure-di-tert-butylester (= Di-tert-butyl-dicarbonat)), halogenierte organische Carbonate (z.B. Chlorethylencarbonat, 1-Chlorethyl-etylencarbonat), Polyethylenglycolether oder N-Methyl-oxazolidon enthalten, wobei der Gesamtanteil Additive bevorzugt 0 bis 10 Gew.-%, bezogen auf den fertigen Elektrolyten, beträgt.

Ganz bevorzugt enthält der erfindungsgemäße Elektrolyt folgende Inhaltsstoffe (Zahlenangaben in Gew.-%):

| | |
|---|---|
| Lithium-bis(oxalato)borat | 10 bis 20 |
| Ethylencarbonat | 15 bis 35 |
| mindestens einen der Stoffe Dimethylcarbonat, Diethylcarbonat, Ethylenmethylencarbonat oder Ethylacetat | 35 bis 55 |
| γ-Butyrolacton , | 15 bis 35 |

Eine weitere besonders bevorzugte Variante des erfindungsgemäßen Elektrolyten enthält folgende Inhaltsstoffe:

| | |
|---|---|
| Lithium-bis(oxalato)borat | 10 bis 20 |
| Ethylencarbonat | 15 bis 25 |
| mindestens einen der Stoffe Dimethylcarbonat, Diethylcarbonat oder Ethylenmethylencarbonat | 30 bis 50 |
| Dimethoxyethan | 5 bis 20 |
| γ-Butyrolacton | 15 bis 35 |

Ein Verfahren zur Herstellung der erfindungsgemäßen Elektrolyte kann wie folgt angegeben werden:

Zuerst wird durch Auflösen des Leitsalzes in den Lösungsmittelkomponenten ein Rohelektrolyt hergestellt. Dieser wird durch Zugabe geeigneter Trockenmittel wie z.B. Lithiumhydrid getrocknet. Dann wird das Trockenmittel von dem getrockneten Elektrolyten abgetrennt. Die Abtrennung kann durch Zentrifugieren oder Filtration erfolgen. Die Filtration kann über einem Bett aus Partikeln, welche aus Oxiden, keramischen Materialien oder schwerlöslichen Lithiumsalzen bestehen können, durchgeführt werden. Beispiele für solche Oxide sind Magnesiumoxid, Calciumoxid, Aluminiumoxid, Titandioxid und Zirkonoxid. Beispiele für keramische Materialien sind Siliziumcarbid und Siliziumnitrid. Beispiele für schwerlösliche Lithiumsalze sind Lithiumcarbonat, Lithiummetaborat, Lithiumaluminat und Lithiumphosphat.

Falls als cyclisches Carbonat Ethylencarbonat eingesetzt wird, kann dieses in fester oder flüssiger Form in einem bevorzugten Temperaturbereich von 15 bis 45 °C eingesetzt werden.

Der Auflösungsvorgang von Ethylencarbonat ist mit einer positiven Enthalpie verbunden. Dagegen ist die Auflösung von Lithiumsalzen in organischen Lösungsmitteln oft mit einer negativen Lösungsenthalpie verbunden. Löst man eine Mischung aus Ethylencarbonat und Lithium-bis(oxalato)borat in den übrigen angegebenen Inhaltsstoffen, so kann vorteilhafterweise auf die sonst notwendige Kühlung des Lösungsmittelgemisches vor dem Einbringen des Leitsalzes verzichtet werden (vgl. DE 19827630 A1, wo in den Beispielen 1 bis 3 eine Kühlung auf 10 °C vorgesehen ist).

Verwendung finden die erfindungsgemäßen Elektrolyte in elektrochemischen Speichersystemen oder in elektrochromen Zubereitungen (z.B. Fenstern).

Die Erfindung wird im folgenden anhand von Beispielen näher erläutert:

### Vergleichsbeispiel A: Herstellung eines Elektrolyten nach dem Stand der Technik

Zu einer Gemisch aus 45 g Dimethylcarbonat (DMC), 22 g Diethylcarbonat (DEC) und 57 g Ethylmethylcarbonat (EMC) wurden 86 g festes Ethylencarbonat (EC) und 30 g Lithium-(bisoxalato)borat (LOB) zugegeben. Nach Auflösen des EC und des LOB wurden 2 g LiH zugegeben. Nach 2-stündigem Rühren wurde das LiH durch Filtration über ein Bett aus 30 g Aluminiumoxid entfernt. Der Wassergehalt des erhaltenen Elektrolyten wurde mittels einer coulometrischen Karl-Fischer-Titration zu < 20 ppm bestimmt. Die Leitfähigkeit dieses Elektrolyten in Abhängigkeit von der Temperatur ist in Tabelle 2 wiedergegeben.

### Vergleichsbeispiel B: Herstellung eines Elektrolyten nach dem Stand der Technik

Zu einem Gemisch aus 91,4 g DEC und 27,2 g Dimethoxyethan (DME) wurden 91,4 g festes EC und 30 g LOB gegeben. Nach Auflösen des EC und des LOB wurden 2 g LiH zugegeben. Nach 2-stündigem Rühren wird das LiH durch Filtration über ein Bett aus 30 g Aluminiumoxid entfernt. Der Wassergehalt des erhaltenen Elektrolyten wurde mittels einer coulometrischen Karl-Fischer-Titration zu < 20 ppm bestimmt. Die Leitfähigkeit dieser Formulierung in Abhängigkeit von der Temperatur ist in Tabelle 2 wiedergegeben.

### Beispiel 1: Herstellung eines Elektrolyten aus LOB, EC, DMC, DEC, EMC, DME und GBL

Zu einem Gemisch aus 30,5 g DMC, 15,0 g DEC, 38,5 g EMC, 21 g DME, 63 g γ-Butyrolacton (GBL) wurden 63 g festes EC und 30 g LOB zugegeben. Nach Auflösen des EC und des LOB wurden 2 g LiH zugegeben. Nach 2-stündigem Rühren wurde das LiH durch Filtration über ein Bett aus 30 g Aluminiumoxid entfernt. Der Wassergehalt des erhaltenen Elektrolyten wurde mittels einer coulometrischen Karl-Fischer-Titration zu < 20 ppm bestimmt. Die Leitfähigkeit dieser Formulierung in Abhängigkeit von der Temperatur ist in Tabelle 2 wiedergegeben.

### Beispiel 2: Herstellung eines Elektrolyten aus LOB, EC, DMC, DEC, EMC, DME und GBL

Zu einem Gemisch aus 127 g DMC, 62 g DEC, 161 g EMC, 140 g DME und 192 g GBL wurden 192 g festes EC und 180 g LOB zugegeben. Nach Auflösen des EC und des LOB wurden 4 g LiH zugegeben. Nach 4-stündigem Rühren wurde das LiH durch Filtration über ein Bett aus 75 g Aluminiumoxid entfernt. Der Wassergehalt des erhaltenen Elektrolyten wurde mittels einer coulometrischen Karl-Fischer-Titration zu < 20 ppm bestimmt. Die Leitfähigkeit dieser Formulierung in Abhängigkeit von der Temperatur ist in Tabelle 2 wiedergegeben.

### Beispiel 3: Herstellung eines Elektrolyten aus LOB, EC, EA und GBL

Zu einem Gemisch aus 55 g EA (Etylacetat) und 20 g GBL wurden 25 g festes EC und 17.8 g LOB zugegeben. Die Lösungsmittel hatten einen Wassergehalt von < 20 ppm. Der Wassergehalt des LOB lag bei < 100 ppm. Nach 30-minütigem Rühren wurde die Lösung über eine PTFE-Membran (d= 450 nm) filtriert. Die Leitfähigkeit dieser Formulierung in Abhängigkeit von der Temperatur ist in Tabelle 2 wiedergegeben.

### Beispiel 4: Herstellung eines Elektrolyten aus LOB, EC, EA und GBL

Zu einem Gemisch aus 45 g EA und 20 g GBL wurden 35 g festes EC und 17.8 g LOB zugegeben. Die Lösungsmittel hatten einen Wassergehalt von < 20 ppm. Der Wassergehalt des LOB lag bei < 100 ppm. Nach 30-minütigem Rühren wurde die Lösung über eine PTFE-Membran (d= 450 nm) filtriert. Die Leitfähigkeit dieser Formulierung in Abhängigkeit von der Temperatur ist in Tabelle 2 wiedergegeben.

Die Zusammensetzungen der in den Beispielen beschriebenen Elektrolyten sind in Tabelle 1 zusammengefasst.

**Tabelle 1:**

| Zusammensetzung der Elektrolyten aus den Vergleichsbeispielen A und B und aus den erfindungsgemäßen Beispielen 1 und 2 | | | | | | | | | |
|---|---|---|---|---|---|---|---|---|---|
| Beispiel | LOB mol/kg | LOB Gew. % | EC Gew. % | DMC Gew. % | DEC Gew. % | EMC Gew. % | EA Gew. % | DME Gew. % | GBL Gew. % |
| A | 0.65 | 12.5 | 35.7 | 18.7 | 9.4 | 23.7 | - | - | - |
| B | 0.65 | 12.5 | 38.1 | - | 38.1 | - | - | 11.3 | - |
| 1 | 0.65 | 12.5 | 17.6 | 12.6 | 6.3 | 16.1 | - | 8.7 | 26.2 |
| 2 | 0.88 | 17.0 | 18.2 | 12.1 | 5.9 | 15.3 | - | 13.2 | 18.3 |
| 3 | 0.77 | 15.0 | 21.2 | - | - | - | 46.7 | - | 17.0 |
| 4 | 0.77 | 15.0 | 29.7 | - | - | - | 38.0 | - | 17.0 |

### Beispiel 5: Vergleich der ionischen Leitfähigkeiten der Elektrolyte aus den Vergleichsbeispielen und den erfindungsgemäßen Beispielen

Elektrolyte für Lithiumionenbatterien sollen auch bei tiefen Temperaturen über ausreichende Leitfähigkeiten verfügen. Um die beschriebenen Elektrolyte miteinander vergleichen zu können, wurden die Leitfähigkeiten der Elektrolytlösungen in einer temperierbaren Zelle gemessen, wobei eine 4-Elektroden-Messkette verwendet wurde und wie folgt vorgegangen wurde:

Zunächst wurde die Leitfähigkeit bei +25 °C (T1) gemessen. Anschließend wurde die Probe bis auf -25 °C abgekühlt. Die Leitfähigkeit wurde eine Stunde nach Beginn der Abkühlung (T2) und zwei Stunden nach Beginn der Abkühlung (T3) gemessen. Danach wurde weiter auf -42 °C abgekühlt, die Leitfähigkeit gemessen (T4), die Temperatur bei -42 bis -43 °C gehalten und die Leitfähigkeit gemessen (T5). Anschliessend wurde die Probe wieder auf -25 °C erwärmt und die Leitfähigkeit 30 Minuten nach Beginn des Aufheizens gemessen (T6). Danach wurde die Probe auf -5 °C (T7) und dann auf +55 °C (T8) erwärmt, um schließlich wieder auf die Anfangstemperatur von +25 °C (T9) gebracht zu werden. Bei allen Temperaturen wurden die Leitfähigkeiten gemessen.

Bei der Messung der Leitfähigkeit des Elektrolyten A trat bei -42 °C ein weißer Niederschlag auf. Ein solcher Niederschlag wurde in keinem Elektrolyten der erfindungsgemäßen Beispiele 1 bis 4 beobachtet.

Die Messergebnisse sind in Tabelle 2 angegeben.

**Tabelle 2:**

| | Leitfähigkeit / [mS/cm] bei Temperaturen T1 bis T9 | | | | | | | | |
|---|---|---|---|---|---|---|---|---|---|
| Beispiel | T1 25°C | T2 -25°C | T3 -25°C | T4 -42°C | T5 -42°C | T6 -25°C | T7 -5°C | T8 55°C | T9 25°C |
| A | 5.42 | 0.82 | 0.77 | 0.16 | 0.10 | 0.26 | 1.09 | 5.04 | 3.41 |
| B | 7.29 | 1.52 | 1.23 | 0.09 | 0.06 | 0.27 | 0.88 | 10.74 | 6.90 |
| 1 | 9.02 | 2.34 | 2.32 | 0.89 | 0.88 | 2.27 | 5.54 | 13.94 | 8.98 |
| 2 | 7.48 | 1.48 | 1.48 | 0.45 | 0.44 | 1.48 | 3.57 | 12.09 | 7.44 |
| 3 | 8.6 | 2.52 | 2.40 | 1.12 | 1.08 | 2.40 | 4.75 | 12.78 | 8.6 |
| 4 | 9.21 | 2.24 | 2.15 | 0.82 | 0.82 | 2.25 | 5.01 | 15.19 | 9.37 |

Aus der Tabelle 2 ist ersichtlich, dass der dem Stand der Technik entsprechende Elektrolyt A bei allen Temperaturen die niedrigste Leitfähigkeit aufwies. Der ebenfalls dem Stand der Technik entsprechende Elektrolyt B wies zwar zu Beginn der Versuchsreihe bei 25 °C eine Leitfähigkeit in der Größenordnung des erfindungsgemäßen Elektrolyten 2 auf, insbesondere bei -42 °C aber war ein deutlicher Einbruch bei der Leitfähigkeit zu beobachten, der sich beim Halten dieser Temperatur noch fortsetzte. Weiterhin wurde nach Abschluss der Versuchsreihe die Ausgangsleitfähigkeit bei 25 °C nicht wieder erreicht.

Demgegenüber zeigten die erfindungsgemäßen Elektrolyte 1 bis 4 insbesondere bei tiefen Temperaturen (-42 °C) wesentlich höhere Leitfähigkeiten als die Elektrolyte A und B. Die Leitfähigkeiten sanken auch bei Halten von -42 °C nicht weiter ab. Nach Abschluss der Versuchsreihe wurden die Ausgangsleitfähigkeiten bei 25 °C im Rahmen der Messgenauigkeit (+/- 3 %) auch wieder erreicht.

### Beispiel 6: Elektrochemischer Stabilitätsbereich des Elektrolyten 1

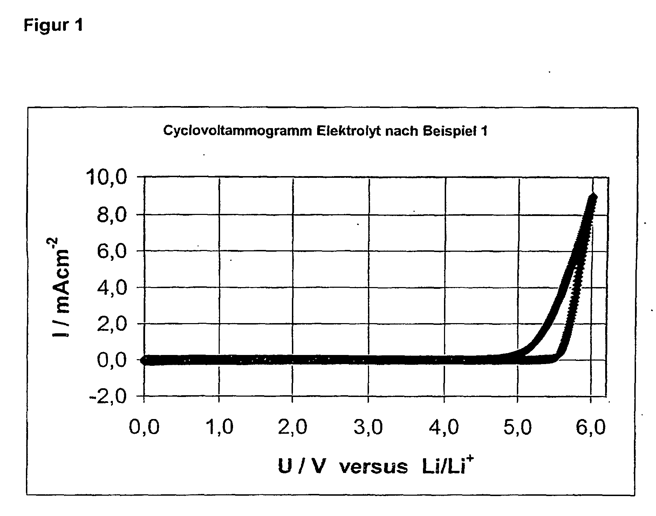

Der elektrochemische Stabilitätsbereich des Elektrolyten 1 ist dem in Figur 1 dargestellten Cyclovoltammogramm (Nickelelektroden, Lithium-Referenzelektrode, 1 mV/s Potentialvorschub) zu entnehmen. In dem Potentialfenster zwischen 2,5 und 4,8 V sind keine signifikanten Stromdichten zu beobachten.

### Beispiel 7: Eignung des Elektrolyten 4 für den Einsatz in Lithiumionenbatterien

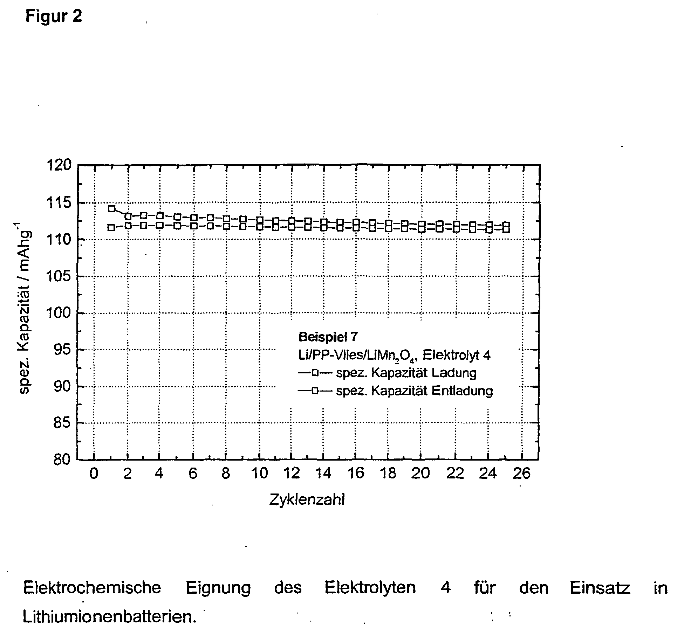

Die Eignung des Elektrolyten 4 für den Einsatz in Lithiumionenbatterien wurde anhand von Lade/Entladeexperimenten untersucht. Als Kathode wurde eine auf einem Aluminiumblech (= Stromsammler) aufgebrachte Beschichtung verwendet, die 87 Gew.-% Lithiummanganspinell als aktiven Anteil, 5 Gew.-% Ruß und 5 Gew.-% eines feinteiligen Grafits zur Verbesserung der elektrischen Leitfähigkeit und 3 Gew.-% Polyvinylidenfluorid als polymeren Binder enthielt. Die Anode bestand aus einem Blech aus Lithiummetall. Als Separator wurde ein Vlies aus Polypropylen eingesetzt. Das so erhaltenen galvanische Element wurde mit einer Stromdichte von 1.0 mA/cm² geladen bzw. entladen. Figur 2 zeigt die so erhaltenen spezifischen Ladungs/Entladungskapazitäten während der ersten 25 Zyklen. Der Abfall der spezifischen Entladungskapazität, gemittelt über die Zyklen 10 bis 25, beträgt 0.025 mAh/g pro Zyklus. Dieser stabile Verlauf der Ladungskapazitäten in Abhängigkeit von der Zyklenzahl weist auf die hervorragende Eignung des Elektrolyten für den Einsatz in Lithiumionenbatterien hin.

## Patentansprüche

1. Elektrolyt, enthaltend Lithium-bis(oxalato)borat,
enthaltend ein cyclisches Carbonat in einer Menge von 10 bis 35 Gew.-%,
enthaltend eine oder mehrere Verbindungen in einer Menge von 35 bis 55 Gew.-%, ausgewählt aus acyclischen Carbonaten, aliphatischen Estern, alicyclischen Ethem und aliphatischen, difunktionellen Ethern,
enthaltend eine oder mehrere Verbindungen in einer Menge von 5 bis 40 Gew.-%, ausgewählt aus Lactonen, Dinitrilen, Verbindungen, die mindestens eine Carbonsäureestergruppe und eine Ethergruppe enthalten, Verbindungen, die mindestens eine Kohlensäureestergruppe und ein Ethergruppe enthalten, Verbindungen, die mindestens eine Nitrilgruppe und eine Ethergruppe enthalten, Trialkylphosphorsäureestern und Trialkylborsäureestern.

2. Elektrolyt nach Anspruch 1, **dadurch gekennzeichnet, dass** der Elektrolyt zusätzlich ein oder mehrere weitere Lithiumsalze oder Alkalimetallsalze oder Ammoniumsalze enthält, wobei das Molverhältnis von Lithiumbis(oxalato)borat zu den weiteren Salzen 99 :1 bis 80 : 20 beträgt.

3. Elektrolyt nach Anspruch 1 oder 2, **dadurch gekennzeichnet, dass** die Summe der Anteile an Lithium-bis(oxalato)borat und ggf. weiterer Alkalimetall- oder Ammoniumsalze im fertigen Elektrolyten 4 bis 35 Gew.-% entspricht.

4. Elektrolyt nach einem der Ansprüche 1 bis 3, **dadurch gekennzeichnet, dass** der Elektrolyt ein oder mehrere Additive, wie Pyrokohlensäureester (z.B. Pyrokohlensäuredimethylester, Di-tert-butyl-dicarbonat, Pyrokohlensäure-di-tert-butylester), halogenierte organische Carbonate (z.B. Chlorethylencarbonat, 1-Chlorethyl-etylencarbonat), Polyethylenglycolether oder N-Methyl-oxazolidon enthält.

5. Elektrolyt nach einem der Ansprüche 1 bis 4, **dadurch gekennzeichnet, dass** der Elektrolyt folgende Stoffe enthält (Zahlenangaben in Gew.-%):
| | |
|---|---|
| Lithium-bis(oxalato)borat | 10 bis 20 |
| Ethylencarbonat | 15 bis 35 |
| mindestens einen der Stoffe Dimethylcarbonat, Diethylcarbonat, Ethylmethylcarbonat oder Ethylacetat | 35 bis 55 |
| γ-Butyrolacton | 20 bis 35 |

6. Verwendung der Elektrolyte gemäß den Ansprüchen 1 bis 5 in elektrochemischen Speichersystemen oder in elektrochromen Zubereitungen (z.B. Fenstern).

## Claims

1. Electrolyte, containing lithium bis(oxalato)borate,
containing a cyclic carbonate in a quantity of 10 to 35 wt.%,
containing one or more compounds in a quantity of 35 to 55 wt.%, selected from acyclic carbonates, aliphatic esters, alicyclic ethers and aliphatic, difunctional ethers,
containing one or more compounds in a quantity of 5 to 40 wt.%, selected from lactones, dinitriles, compounds containing at least one carboxylic acid ester group and an ether group, compounds containing at least one carbonic acid ester group and an ether group, compounds containing at least one nitrile group and an ether group, trialkyl phosphoric acid esters and trialkyl boric acid esters.

2. Electrolyte according to claim 1, **characterised in that** the electrolyte additionally contains one or more other lithium salts or alkali metal salts or ammonium salts, the molar ratio of lithium bis(oxalato)borate to the other salts being 99 : 1 to 80 : 20.

3. Electrolyte according to claim 1 or 2, **characterised in that** the sum of the proportions of lithium bis(oxalato)borate and optionally other alkali metal or ammonium salts in the final electrolyte corresponds to 4 to 35 wt.%.

4. Electrolyte according to one of claims 1 to 3, **characterised in that** the electrolyte contains one or more additives, such as pyrocarbonic acid esters (e.g. pyrocarbonic acid dimethyl ester, di-tert-butyl dicarbonate, pyrocarbonic acid di-tert-butyl ester), halogenated organic carbonates (e.g. chloroethylene carbonate, 1-choroethyl ethylene carbonate), polyethylene glycol ether or N-methyl oxazolidone.

5. Electrolyte according to one of claims 1 to 4, **characterised in that** the electrolyte contains the following substances (figures in wt.%):
| | |
|---|---|
| lithium bis(oxalato)borate | 10 to 20 |
| ethylene carbonate | 15 to 35 |
| at least one of the substances dimethyl carbonate, diethyl carbonate, ethyl methyl carbonate or ethyl acetate | 35 to 55 |
| γ-butyrolactone | 20 to 35 |

6. Use of the electrolytes according to claims 1 to 5 in electrochemical storage systems or in electrochromic preparations (e.g. windows).

## Revendications

1. Electrolyte contenant :
du bis(oxalato)borate de lithium,
un carbonate cyclique en une proportion de 10 à 35% en poids,
un ou plusieurs composés pris parmi les carbonates acycliques, les esters aliphatiques, les éthers alicycliques et les éthers aliphatiques difonctionnels, en une proportion de 35 à55% en poids,
un ou plusieurs composés pris parmi les lactones, les dinitriles, les composés contenant au moins un groupe ester carboxylate et un groupe éther, les composés contenant au moins un groupe ester carbonate et un groupe éther, les composés contenant au moins un groupe nitrile et un groupe éther, les esters trialkyliques de l'acide phosphorique et les esters trialkyliques de l'acide borique, en une proportion de 5 à 40% en poids.

2. Electrolyte selon la revendication 1, **caractérisé ce qu**'il contient en outre un ou plusieurs autres sels de lithium ou sels de métal alcalin ou sels d'ammonium, le rapport molaire du bis(oxalato)borate de lithium aux autres sels étant de 99 :1 à 80 :20.

3. Electrolyte selon la revendication 1 ou 2, **caractérisé en ce que** la somme des proportions de bis(oxalato)borate de lithium et éventuellement des autres sels de métal alcalin ou d'ammonium représente 4 à 35% en poids dans l'électrolyte fini.

4. Electrolyte selon l'une quelconque des revendications 1 à 3, **caractérisé en ce qu'**il contient un ou plusieurs additifs, tels que des esters de l'acide pyrocarbonique (par exemple l'ester diméthylique de l'acide pyrocarbonique, le dicarbonate de di-tert-butyle, l'ester di-tert-butylique de l'acide pyrocarbonique), des carbonates organiques halogénés (par exemple le carbonate de chloroéthylène, le carbonate de 1-chloroéthyl-éthylène), des éthers de polyéthylèneglycol ou la N-méthyl-oxazolidone.

5. Electrolyte selon l'une quelconque des revendications 1 à 4, **caractérisé en ce qu'**il contient les produits suivants (les données chiffrées correspondent aux pourcentages en poids) :
| | |
|---|---|
| Carbonate d'éthylène | 15 à 35 |
| Au moins l'un des produits carbonate de diméthyle, carbonate de diéthyle, carbonate d'éthyle et de méthyle et acétate d'éthyle | 35 à 55 |
| γ-butyrolactone | 30 à 35. |

6. Utilisation des électrolytes selon l'une quelconque des revendications 1 à 5, dans des accumulateurs électrochimiques ou dans des préparations électrochromes (par exemple pour des fenêtres).
